# EUROPEAN PATENT APPLICATION

(11) **EP 3 744 185 A1**
(43) Date of publication of application: **02.12.2020**
(21) Application number: 19177431.4
(22) Date of filing: 29.05.2019
(51) Int. Cl.: A24F 23/00, B65D 81/00

(54) **A CONTAINER**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A container for an oral smokeless article including a container body and a lid, wherein the container is formed from a bioplastic material, the bioplastic material including a biopolymer, and wherein the bioplastic material is biodegradable.

## Description

### Field of the Invention

The present invention relates to a container for an oral smokeless article, and particularly, although not exclusively for snus.

### Background

Smoking is generally considered to expose a smoker to potentially harmful substances. It is generally thought that the majority of the potentially harmful substances are formed by the heat generated during burning (combustion) of the article. There is interest in so-called heat not burn products, which heat a tobacco or similar substrate at a lower temperature than a conventional cigarette. These products are usually described as less harmful than convention cigarettes. Both conventional cigarettes and heat not burn products are visible during use and produce smoke or vapour.

As a result of these considerations and because of consumer preferences, it is desirable to find and improve alternative substance delivery routes that to continue meet user expectations. Smokeless articles are a suitable alternative because they do not require heating for substance delivery to the user. Instead, smokeless articles rely on saliva to extract soluble substances, typically nicotine and/or flavours, from tobacco contained within the smokeless article.

Conventional smokeless articles have a saliva permeable pouch housing a content. The content is generally in the form of tobacco. Said tobacco containing a soluble element, typically nicotine. Such a product may be referred to a portion snus. It is typically provided as prepackaged (traditionally moist) powder in small teabag-like pouches. Each pouch is a single portion or unit. This moistened product may be referred to as original snus.

Smokeless articles are placed in the mouth where saliva extracts the soluble element from the tobacco contained within. Typically, the smokeless article is placed in the oral cavity, sublingually or in the oral vestibule (between the teeth and lips/cheeks). The user may assist extraction by oral manipulation, such as by chewing and/or sucking or pressing on the outside of the mouth to squeeze the pouch.

The resulting saliva, which contains extracts, subsequently contacts a mucous membrane in the mouth, or at another point of the gastrointestinal tract, to deliver the soluble element across the membrane and into the bloodstream. The soluble element is then transported by the bloodstream to the site of action. For example, nicotine is delivered to the brain where it acts upon acetylcholine receptors.

The above described extraction and delivery process continues until the soluble element is depleted from the smokeless article. The smokeless article must then be removed from the mouth and disposed of.

Some commercially available smokeless articles contain snuff. Snuff is smokeless tobacco made from ground or pulverised tobacco leaves. Snuff is available in dry form or wet (moist) form. Moist snuff may be referred to as snus. Two common varieties of snus are Scandinavian snus and American snus. Both varieties of snus are available in a loose form, but are often contained within a saliva permeable pouch.

Typically, production of snus is achieved by grinding a blend of leaf tobaccos to specified particle sizes. The ground tobacco is then mixed with water and sodium chloride in closed process blenders. The mixture is subjected to a heat treatment, involving temperatures up to 80 - 100 °C, for several hours to pasteurize the snus. Thereafter, the snus is cooled and other ingredients may be added. Snus is typically manufactured to meet the GothiaTek® standard, as detailed in "Swedish snus and the GothiaTek® standard" (2005), Rutqvist, et al.

The World Health Organisation states that smokeless articles are considerably less hazardous than cigarettes. Action on Smoking and Health considers smokeless articles to be about one hundred times less harmful than cigarettes. Smokeless articles are therefore thought to provide a healthier alternative for smokers.

There is a need for improved design of containers for smokeless articles to enhance the user's experience of the smokeless article.

The present invention has been devised in light of the above considerations.

### Summary of the Disclosure

According to a first aspect, there is provided a container for an oral smokeless article comprising a container body and a lid, wherein the container is formed from a bioplastic material, the bioplastic material comprising a biopolymer, and wherein the bioplastic material is biodegradable.

As used herein the term "bioplastic material" is intended to refer to a plastic material derived from a renewable biomass source, and has been moulded into shape while soft, and set into a rigid or slightly elastic form. The bioplastic has sufficient structural rigidity as to be self-supporting. Suitable biomass sources include but is not limited to vegetable fats and oils, corn starch, straw, woodchips and food waste.

As used herein the term "biopolymer" is intended to refer to a polymer derived from a renewable biomass source or issued from monomers derived from the biomass.

As used herein the term "biodegradable" is intended to refer to a substance or object that is capable of being broken down, especially into innocuous products, by the action of living things (such as microorganisms) under typical environmental conditions.

The container is primarily intended as a storage container for snus, but it can be used for other types of oral smokeless article. Generally, when a user has exhausted the supply of oral smokeless articles stored within the container, the container is discarded as waste. Containers made from typical materials such as metal or fossil-fuel derived plastics may persist in the environment for several hundreds of years to the detriment of flora and fauna. In addition using fossil-fuels to manufacture typical plastics uses up vital non-renewable resources. By having a container formed from a bioplastic material the use of non-renewable sources is mitigated, therefore manufacture of the container has a much lower environmental impact than typical containers. Also, as the container is biodegradable it does not persist in the environment, and will breakdown into harmless products.

The container comprises a container body and a lid. The container body and lid define an enclosed volume when the lid is in a closed position. The container may take any suitable shape. In a preferred embodiment the container is cylindrical. The lid of the container may attach to the container body portion by a push-fit, screw thread or any other suitable method. The lid and/or container may be formed from the bioplastic material. Preferably the bioplastic material from which the container is formed is impermeable to moisture.

Preferably, the bioplastic material conforms to the European Standard EN 13432:2000.

Preferably, the bioplastic material conforms to the standard of biodegradability as described in EN 13432:2000. According to EN 13432:2000 biodegradability is the capability of a material to be converted into CO₂ under the action of micro-organisms. This property may be measured with a laboratory standard test method EN 14046 (also published as ISO 14855: biodegradability under controlled composting conditions). In order to show complete biodegradability, a biodegradation level of at least 90 % must be reached in less than 6 months.

Preferably, the bioplastic material conforms to the standard of disintegrability as described in EN 13432:2000. According to EN 13432:2000 disintegrability is a measure of fragmentation and loss of visibility in the final compost (absence of visual pollution). This property may be measured in a pilot scale composting test (EN 14045). Specimens of the test material are composted with biowaste for 3 months. The final compost is then screened with a 2 mm sieve. The mass of test material residues with dimensions > 2 mm shall be less than 10 % of the original mass.

Preferably, the bioplastic material conforms to the ecotoxicity standard as described in EN 13432:2000.

Preferably, the bioplastic material conforms to the heavy metal concentration threshold as described in EN 13432:2000.

The bioplastic material may be comprised of any suitable biopolymer provided that the bioplastic material is biodegradable.

Preferably, the biopolymer is selected from polylactic acid, polyhydroxyalkanoate, polybutylene succinate, starch, polysaccharide and combinations thereof. Most preferably, the biopolymer is selected from polylactic acid and/or polyhydroxyalkanoate.

In this way, a bioplastic container having suitable biodegradable properties is provided.

Preferably, the polysaccharide is selected from agar, pectin, carrageenan, gelatin, corn starch, gellan gum, guar gum, gum arabic, isomalt, konjac, lecithin, locust bean gum, maltodextrin, methyl cellulose, alginates, xantham gum, tapioca and combinations thereof.

In this way a polysaccharide-based bioplastic container having suitable biodegradable properties is provided. Also, the selected polysaccharides are desirable source of renewable biomass, and therefore are better for the environment. Also, the selected polysaccharides are desirable as a sustainable source of biomass.

Preferably, the bioplastic material is a composite material comprising the biopolymer and a fibrous reinforcement.

In this way, a bioplastic material with improved mechanical properties (e.g. impact resistance) is provided.

Preferably, the fibrous reinforcement is plant fibre.

In this way a more environmentally friendly container is provided as the fibrous reinforcement is derived from a renewable and sustainable source (i.e. plant fibre).

Preferably, the plant fibre is selected from corn, cornstalks, bamboo, bamboo stalks, flax, flax fibre, hemp, wood fibre and combinations thereof.

These plant fibres are found to provide a composite material with desirable mechanical properties. They are also particularly desirable as renewable and/or sustainable sources of biomass.

Preferably, the container comprises a wrapper that covers at least a portion of the external surface of the container.

In this way, the wrapper can provide the user with product information, aesthetic appeal and/or branding. The wrapper may be made from any suitable material such as cardboard, paper, biodegradable biopolymer etc. Preferably, the wrapper is a biodegradable material.

Preferably, the container comprises a moisture impermeable coating. Preferably, the moisture impermeable coating is a biodegradable material. In particular, the moisture impermeable coating is a biodegradable biopolymer. In one embodiment the moisture impermeable coating is a liner comprising cotton and/or hemp and a natural wax (e.g. beeswax). Preferably, the moisture impermeable coating lines an internal surface of the container body and/or lid.

The moisture impermeable coating is separate and distinct to the bioplastic material the container is formed from. In this way, by providing a moisture impermeable coating the moisture impermeability of the container is improved. This prevent smokeless articles contained within the container from drying out, thus extending their shelf life and improving user satisfaction.

Preferably, the oral smokeless article is snus.

Preferably, the container body contains one or more oral smokeless articles.

According to a second aspect there is provided use of the container according to the first aspect to store an oral smokeless article.

According to a third aspect there is provided a kit-of-parts comprising the container according to the first aspect and a plurality of oral smokeless articles.

### Summary of the Figures

Embodiments and experiments illustrating the principles of the invention will now be discussed with reference to the accompanying figures in which:
**Figure 1****.** is an-exploded view of an embodiment of a container
**Figure 2****.** is a perspective view of a container of Figure 1.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

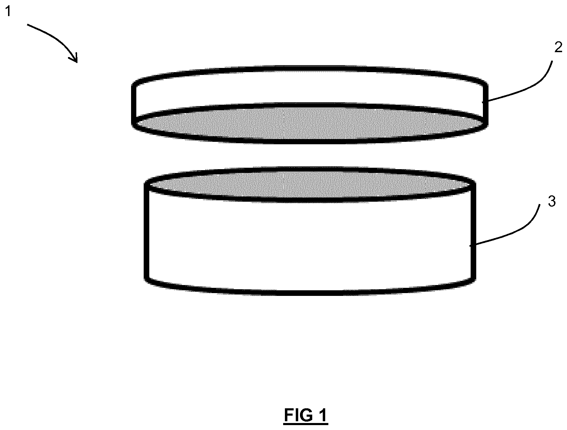

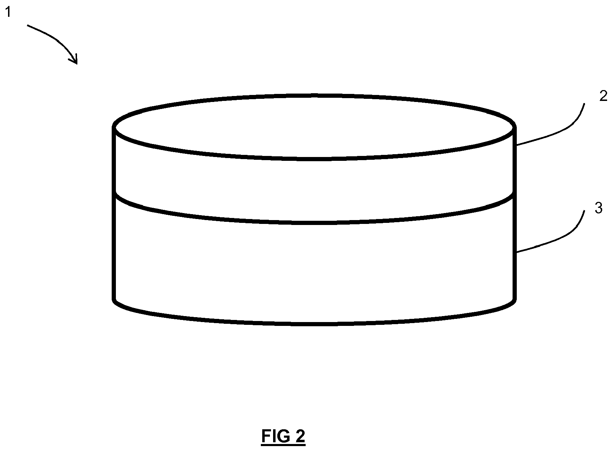

Figure 1 shows an exploded view of a container 1 having a container body 3 and a lid 2. The lid 2 is configured to attach to the container body 3 to provide a seal, as shown by Figure 2, this is typically achieved by a push-fit arrangement. The container body 3 and lid 2 are formed from a bioplastic material, said bioplastic material comprising a biopolymer, wherein the bioplastic material is biodegradable. In particular, the bioplastic material is a composite material comprising the biopolymer and a fibrous reinforcement (e.g. flax). Within the container 1 a smokeless article (not shown) is contained. A typical smokeless article is snus, in particular pouched snus.

Figure 2 is a perspective view of the container 1 where the lid 2 is engaged with the container body 3 to provide a container 1 in a closed position.

In use, the user places a smokeless article within the container body 3 and closes the lid 2 to store the smokeless article within the enclosed volume of the container 1. Once all the smokeless articles have been consumed by the user the container may be thrown away. As the container is biodegradable it will not persist in the environment for as long as conventional plastic containers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A container for an oral smokeless article comprising a container body and a lid, wherein the container is formed from a bioplastic material, the bioplastic material comprising a biopolymer, and wherein the bioplastic material is biodegradable.

2. The container of claim 1, wherein the biopolymer is selected from polylactic acid, polyhydroxyalkanoate, polybutylene succinate, starch, polysaccharide and combinations thereof.

3. The container of claim 2, wherein the polysaccharide is selected from agar, pectin, carrageenan, gelatin, corn starch, gellan gum, guar gum, gum arabic, isomalt, konjac, lecithin, locust bean gum, maltodextrin, methyl cellulose, alginates, xantham gum, tapioca and combinations thereof.

4. The container of any preceding claim, wherein the bioplastic material is a composite material comprising the biopolymer and a fibrous reinforcement.

5. The container of claim 4, wherein the fibrous reinforcement is selected from plant fibre.

6. The container of claim 5, wherein the plant fibre is selected from corn, cornstalks, bamboo, bamboo stalks, flax, flax fibre, hemp, wood fibre and combinations thereof.

7. The container of any preceding claim comprising a wrapper that covers at least a portion of the external surface of the container.

8. The container of any preceding claim comprising a moisture impermeable coating.

9. The container of claim 8, wherein the moisture impermeable coating lines an internal surface of the container body and/or lid.

10. The container of any preceding claim, wherein the oral smokeless article is snus.

11. The container of any preceding claim, wherein the container body contains one or more oral smokeless articles.

12. Use of the container according to any of claims 1 to 11 to store an oral smokeless article.

13. A kit-of-parts comprising the container of any of claims 1 to 10 and a plurality of oral smokeless articles.
